# EUROPEAN PATENT SPECIFICATION

(11) **EP 1 741 340 B1**
(45) Date of publication and mention of the grant of the patent: **16.04.2014**
(21) Application number: 06388048.8
(22) Date of filing: 03.07.2006
(51) Int. Cl.: A22B 5/00, A22C 17/00

(54) **Apparatus for and method of cutting the meat of a middle in connection with longitudinal cutting middles**
Vorrichtung und Methode zum Zerteilen von Karkassenmitten in Verbindung mit Längsschneiden von Karkassenmitten
Dispositif et méthode de découpe de carcasse en connection avec le découpage longitudinal des carcasses

(30) Priority: 04.07.2005 DK 200500985
(43) Date of publication of application: 10.01.2007
(73) Proprietor: Teknologisk Institut, 2630 Taastrup (DK)
(72) Inventor: Mejslov, Jesper, 4174 Jystrup Midtsjælland (DK); Folkmann, Peter, 4140 Borup (DK); Nielsen, Finn, 3450 Allerød (DK)
(74) Representative: Joergensen, Bjoern Barker

(56) References cited:
- EP-A2- 1 059 037
- WO-A-93/03621
- WO-A-95/17825
- WO-A-98/42196
- WO-A2-01/82706
- DE-A1- 3 802 466
- US-A- 5 295 898
- US-A1- 2006 035 576

## Description

The present invention relates to an apparatus for and a method according to the preamble of claims 1 and 13, respectively.

Middles from pig carcases are usually separated into a loin part and a belly part by being given one or more longitudinal cuts extending at a distance from the spine. The separation may be performed by a cut going through both the ribs and the meat, but in certain productions it may be advantageous to separate the middles by two cuts extending differently in the meat part and the rib part. This may be effected by the operator first cutting through the ribs so as to separate them in the desired way. Then the ribs are cut away, and finally the operator separates the ribless meat to provide the desired cuts. However, as the process is complicated and a physical strain on the operator, it is only used when substantial financial advantages are obtained thereby.

An obvious solution to this problem is to automate the separation of middles by longitudinal cuts extending differently in meat and ribs. For this purpose, a special wing-shaped knife, described in DK-B-173899, has been developed. This knife is used for a so-called undercutting of the ribs, whereby a cut is made along the ribs on the side facing the meat part, substantially parallel with the plane of the middle. The cut that is made at the undercutting connects the two cuts in the rib part and the meat part, respectively. Use of the knife presupposes that one of the longitudinal cuts is made before the undercutting in order to make room for the knife, and the second only subsequently so that the non-cut part can keep the middle together during the undercutting.

However, use of the wing knife does not allow complete automation of the separation of the middle. For one reason, there are only ribs in part of the middle, and for another reason the ribs curve differently in different parts of the middle. This may, for example, result in meat being left on the undersides of the ribs or the knife cutting into the ribs. Furthermore, the wing knife does not solve the particular problems of accurately cutting free the last rib, which is located approximately halfway down the middle. Often, this rib will have meat left on it that should have been cut free together with the meat part.

EP-A-985 348, upon which the preamble of claim 1 is based, discloses an apparatus for longitudinal cutting middles, which are conveyed with their rib sides facing upwards and their rind sides facing downwards. The apparatus may i.a. separate the middles into a loin part and a belly part by cuts extending through meat and ribs, but the apparatus may also perform cuts that extend through rind and meat without cutting the ribs. For the latter it is suggested to use a non-rotating knife having a shape like a butchers knife, though a rotating circular knife is shown in the specific embodiments. In a second specific embodiment the middles are conveyed by means of a conveyor of the art disclosed in EP-A-1 059 037, which holds the middles by the spine. This second embodiment comprises a resiliently suspended support for the rind side, and it may comprise another support, not shown and not described in any detail, for supporting the rib side of the middle during cutting.

It is the object of the present invention to provide an apparatus and a method for automated cutting of the meat part of middles whereby it is possible to obtain a cut that reaches to the underside of the ribs, preferably without cutting into the ribs.

According to the invention, this object is obtained in that the apparatus, wherein the abutment is movable in a direction downwards towards and away from the meat knife, and that the meat knife is movable in a direction upwards towards the abutment with a force smaller than the force whereby the abutment can be moved downwards. Thereby, the cut may go all the way up to the underside of the ribs as the abutment presses on the upper side of the ribs towards the meat knife and it is possible to exercise a controlled pressure on the middle from both sides.

In a particularly preferred embodiment, the meat knife is adapted not to cut into the ribs. This may be provided in various ways, for example by the meat knife comprising a control member located underneath the abutment and having a guide surface that may be made to make contact with the underside of the ribs of the middle in/at the cut in the middle made by the meat knife. This makes a very accurate control of the abutment and/or meat knife superfluous.

The control member may comprise a wing knife with a first knife part arranged in a plane of the meat knife and a second knife part projecting to one side from the upper edge of the first knife part and possibly a third knife part projecting to the other side. A very compact structure is thus achieved as control and undercutting of the ribs may be performed by one and the same device. It is particularly preferred that the second and/or the third knife part of the wing knife may be moved to a plane above the rest of the meat knife so that the upper surface(s) of the knife part(s) serve(s) as guide surface(s).

The combined use of a wing knife and an abutment also results in close undercutting of the ribs because the middle cannot rise substantially relative to the wing knife, and at the cutting in the flank part of the middle, which has no ribs, the abutment prevents the soft meat from moving before the meat knife.

When a wing knife is used, it may be advantageous that the part of the meat knife that performs the cut from the rind and up to the ribs is not moved all the way up to the underside of the ribs, but that the top part of the cut is instead made with the first knife part of the wing knife. In that case, the first knife part preferably, in a working position, has a sharp upper edge which is located at a level below the second knife part and rises in the conveying direction of the middle and/or a sharp lower edge which falls in the conveying direction of the middle.

In a preferred embodiment, the apparatus comprises the meat knife in form of a cutting unit comprising a knife for performing the cut in the meat and a wing knife for undercutting, which cutting unit may be moved upwards so that the wing knife makes contact with the at least one abutment. Use of an aggregate unit comprising both wing knife and knife results in completely synchronised positioning thereof relative to the middle. The abutment may make direct contact with the wing knife so as to position the cutting unit at the start of the cutting or it may make contact with the rib side to keep the middle in contact with the wing knife, the upper surface of which is guided along the underside of the ribs.

To ensure accurate mutual positioning of the middle and cutting unit regardless of the dimensions of the middle, the movement of the abutment towards the cutting unit or the meat knife is preferably limited by a stop.

As the middle has a natural curvature, and as substantial variations may also occur as a result of the diverse sizes and breeds of the animals to be slaughtered, the abutment and the meat knife are preferably spring loaded towards each other during operation so that they may adjust to each other and the ribs during cutting. This also contributes to the close undercutting as the wing knife will all the time be moved as closely against the undersides of the ribs as possible.

Also to obtain the closest possible undercutting, the second and/or third knife part of the wing knife is/are preferably mounted so that it can tilt about an axis being substantially parallel with the direction of the relative movement between the meat knife and the retention device. In this way, the angling of the knife blade may adjust to the curvature of the current rib.

During the preliminary part of the cutting, during which the middle is to be positioned relative to the cutting unit and the cutting unit may have to be pressed down to position it relative to the middle, as will be explained in further detail below, the demands made of the abutment differ from those made during the subsequent part of the cutting, when the middle merely has to be prevented from seeking upwards. The apparatus therefore preferably comprises two abutments which are moveable independently of each other between an inactive position and at least one active position. The first abutment is used during the preliminary part of the cutting, while the second abutment is used during the subsequent part. Preferably, only one of the abutments is active at a time, but situations may occur in which it will be an advantage that both abutments are active at the same time.

In a particularly preferred embodiment, the abutments are swingable arms, the first abutment being located above the cut of the meat knife and the second abutment preferably is located in a position on the far side of the first abutment as seen from the retention device.

In this way, the cutting unit may be pressed down by an abutment arranged centrally above the cutting unit, which results in the smallest possible load on the cutting unit. In return, the displaced location of the second abutment ensures that the knives cannot make contact with the abutment during the cutting of the flank part. As described above, the two abutments may function separately or at the same time, but in one embodiment the first abutment is moved to its inactive position before the cutting of the flank part is started.

If the wing knife is only used in the part of the middle that contains ribs, and not in the flank part, it can preferably be moved between two or more different positions, at least one of these positions being a working position and one of these positions being an inactive position. At the transition between the rib part and the flank part, the wing knife may then be moved from an active to an inactive position or vice versa depending on the conveying direction of the middle. By moving the wing knife between several different active positions, it is also possible to obtain adjustment to the curvature of the middle.

The part of the meat knife which performs the cut from the rind and up to the ribs may be designed in different ways, but in a preferred embodiment it is a circular blade, and the wing knife may then be movable between its different positions by turning about the centre of the circular blade.

The apparatus may also comprise a rib saw for cutting the ribs at a distance from the spine, which saw is arranged downstream of the meat knife.

The transport arrangement may be of the structure described in Danish patent DK-C-173412 and the corresponding EP-A-1 059 037.

It should be mentioned that the apparatus according to the invention may comprise other cutting units, such as a rib top saw for cutting off the rib heads, knives for cutting along the meat-rib transitions of the spine, a knife for separating the meat part from the rib part, etc.

The purpose is also obtained with a method of cutting the meat part of a middle by means of a meat knife, possibly comprising a wing knife, the middle being kept in contact with the meat knife by means of at least one abutment.

The above is based on an apparatus in which the middle is conveyed forwards with the rib part first followed by the flank part and with the rind side facing downwards. However, it should be understood that an apparatus may also be contemplated in which the rind side faces upwards or laterally, and in which the cutting devices, abutments, etc., and their directions of movement are therefore will be located and orientated, respectively, accordingly.

An embodiment of the invention will now be described in further detail below with reference to the accompanying drawing, in which
Fig. 1 is a top view of a middle indicating cutting lines and location of abutments,
Fig. 2 shows a section of a middle, and a side view of an abutment and a cutting unit comprising a wing knife and a circular knife,
Figs. 3a-c show a side view of the cutting unit in three different positions of the wing knife,
Fig. 4a shows a perspective close-up of the wing knife,
Fig. 4b shows a top view of the wing knife of Fig. 4a, and
Fig. 5 shows a side view, partly sectioned, of an apparatus according to the invention.

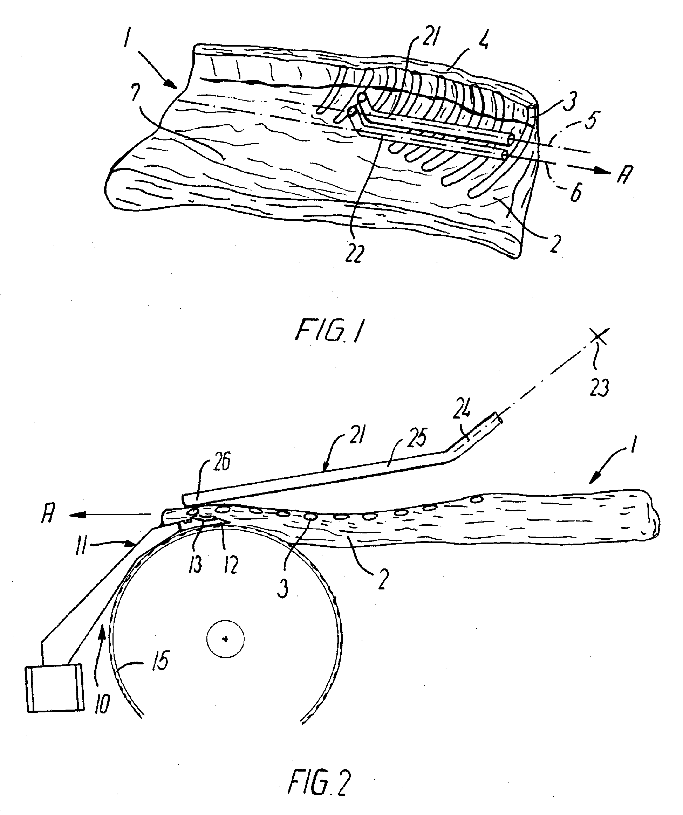

When cutting middles 1 (Fig. 1), it is often desirable that the meat part 2 and the ribs 3 are cut at respective distances from the spine 4. Typically it is desired that the ribs at the loin are longer and the belly meat wider than when meat and ribs are cut by a single cut. Therefore, two staggered cuts as shown in Fig. 1 are used with a meat cut 5 being closer to the spine 4 than a rib cut 6. However, this makes it necessary to cut the meat free of the ribs in the area between the two cuts 5 and 6. As the middle is typically handled with the rib side upwards as shown in Fig. 1, this cut is also called an undercut. The undercut may be performed in many different ways, for example manually or with a so-called wing knife 11 as illustrated in Fig. 2.

In the embodiment shown in the drawing, the wing knife 11 constitutes part of a cutting unit 10, which also comprises a circular knife 15. As shown in Fig. 2, the wing knife 11 and the circular knife 15 jointly perform the cut 5, the circular knife cutting most of the meat part 2, while the wing knife at its point has a first knife part in the shape of a knife blade 12 with an edge 12a which is parallel with the circular blade and takes the cut all the way up to the underside of the ribs 3. Wings 13, which constitute a second and a third knife part or a second and a third knife blade, perform the actual undercutting, and in the embodiment shown the wing knife performs a combined undercutting and cutting of the meat part.

However, embodiments may also be contemplated in which the circular knife 15 is located higher and cuts all the way up to the underside of the ribs, while the wing knife only has cutting edges on the wings 13 parallel with the ribs. Likewise, it is also possible to contemplate an extension of the knife blade 12 of the wing knife standing at right angles to the rib plane, the knife blade 12 being modified in such a way as to obviate the circular knife.

According to the invention, the middle 1 is held against the cutting unit 10 by means of at least one abutment 21 as shown in Fig. 2. This ensures a completely close undercutting of the ribs 3 and a complete cutting of the meat part 2. Without the abutment, the ribs might yield and move before the knives. In addition, the abutment ensures that the meat part without ribs is cut through.

Before the cutting starts, the abutment 21 is moved to make contact with the upper surface of the wing knife 11 and to press the cutting unit 10 20-30 mm downwards. This is done by means of a pneumatic cylinder (not shown), which permits the abutment to move up and down against the downward force of the cylinder in that the pneumatic cylinder in a manner known per se acts as a spring. The abutment hits the upper surface of the wing knife and presses the cutting unit downwards against an upward force from another pneumatic cylinder (not shown), which actuates the cutting unit upwards. At the maximum cylinder stroke of the pneumatic cylinder provides a stop, which takes the movement of the abutment to a halt.

The middle is envisaged to be suspended in a conveyor not shown of the art disclosed in EP-A-1 059 037. The conveyor moves the middle 1 forwards in direction A (Fig. 2) whereby it hits an oblique part 24 of the abutment. The middle is forced downwards and gets underneath a less oblique portion 25 and finally under an end 26 of the abutment 21 where the rib side is in close contact with the abutment. The knife blade 12 cuts the meat part under the ribs where the circular knife 15 was unable to reach, and as the upper edge of the knife blade 12 hits the ribs, the cutting unit is pressed downwards due to the wedge effect between the abutment and the upper edge of the knife blade 12 so that the wing knife 11 can move in and cut along the underside of the ribs. Thereby, the abutment 21 exercises pressure on the upper side of the ribs and the cutting unit 10 exercises pressure on the underside of the ribs, which ensures that the wings 13 of the wing knife cut close to the underside and that the circular knife cuts up to a position close to the underside of the ribs.

In a particularly preferred embodiment, two mutually displaced abutments 21 and 22 are used as shown in Fig. 1. At the start of the cutting, the abutment 21 located directly above the cutting unit 10 is used, the ribs 3 being located between the knives 11, 15 and the abutment 21. This presupposes that the conveying movement of the middle is as shown by the arrow A in Figs. 1 and 2.

During the cutting of the rib-free flank part 7 of the middle, it is desirable that the circular knife goes through the meat without risk of collision with the abutment 21, which is therefore lifted before the cutting reaches the flank part 7. Instead, a second abutment 22 has been provided in a position displaced from the cutting unit. The second abutment may be active during the entire cutting process, or a shift may be made from one abutment to the other during the cutting. Such a shift may be made at any time, while the cutting unit is positioned opposite to the ribs, but it preferably takes place as soon as the cutting unit has got a grip.

In the embodiment shown, the abutments 21 and 22 are designed as substantially identical rod-shaped arms rotatable about a common centre of rotation 23. However, it should be understood that abutments moved, for example, between an active and an inactive position by a movement at right angles to the plane of the middle may work just as well. Embodiments may also be contemplated in which the two abutments have different appearances and modes of action, or where more than two abutments are used. The latter may, for example, be advantageous if the curvature of the middle has to be taken into consideration.

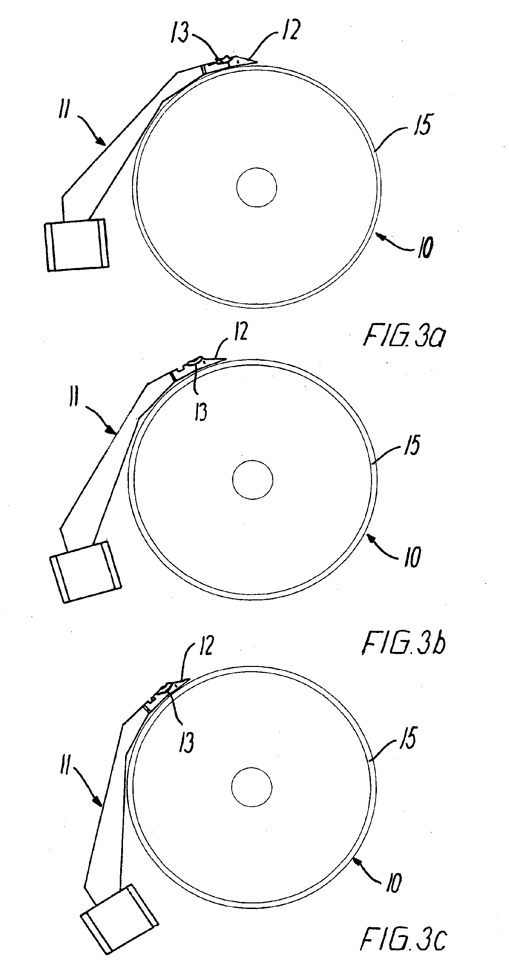

Likewise in consideration of the curvature of the middle, the wing knife 11 can preferably be moved between two or more active positions in which it is angled differently relative to the conveying direction A of the middle 1. The two positions are shown in Figs. 3a and 3b. The first position is used when the cut of the wing knife in the middle is to be started. The second position is used after the wing knife has got a distance into the middle, for example 40-60 mm. The transition between the two positions, which are shown in Figs. 3a and 3b, may be sudden, stepwise or smooth.

In the flank part 7 of the middle, which has no ribs, the wing knife 11 is superfluous. The wing knife 11 can therefore preferably be moved to a third, inactive position as shown in Fig. 3c before reaching the flank part, for example having passed 300-350 mm into the middle. This presupposes that, as mentioned above, an abutment 22 is used which is displaced relative to the cut 5 in the meat. However, an embodiment may also be contemplated in which an abutment 21 located above the cut is also used at the cutting of the flank part, and in which the wing knife then remains in an active position during the entire cutting. As there is no cutting edge on the upper surface of the wing knife, the abutment may be in direct contact with it.

In a preferred embodiment the wing knife is moved to the inactive position after passing the shortest measured rib, which is located in the transition between the rib part and the flank part. By shortest measured rib is meant the rib that crosses the meat cut, is furthest towards the flank part and is detectable. Thus, preferably a detection of the ribs is performed up stream of the apparatus described herein but while the middle is suspended in the conveyor, e.g. by means of a device as disclosed in EP-A-1 059 037. Having knowledge of the speed of the conveyor and the distance between the detecting device and the herein described cutting device the time of passage of the shortest measured rib may be calculated.

It should be noted that the wing knife in its inactive position makes its way up through the meat (which is thereby pulled down), whereby the wing 13 assumes an inactive position above the middle.

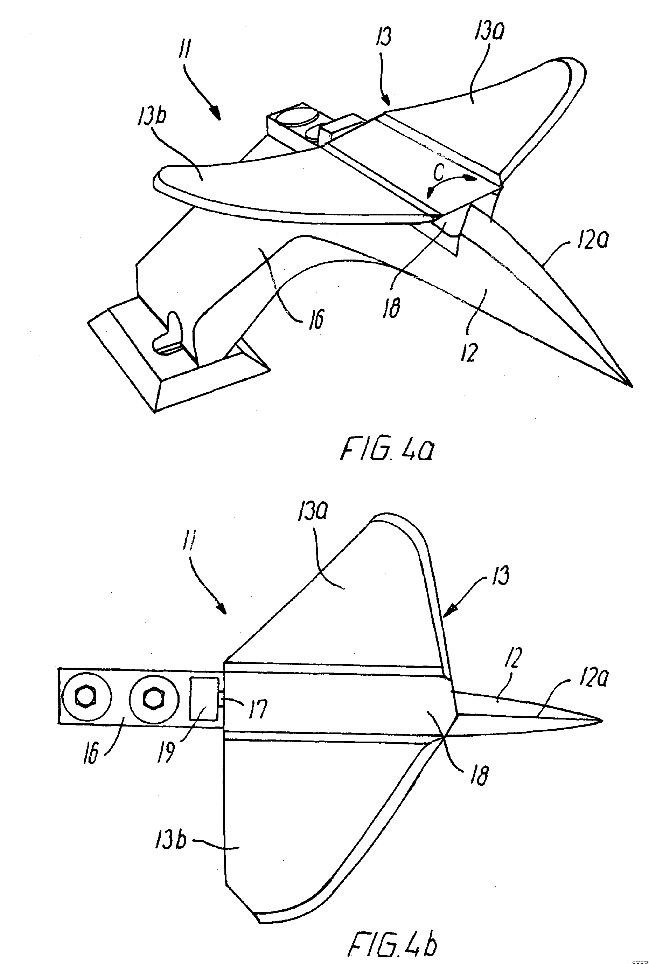

An example of the embodiment of the wing knife 11 with two wings is shown in detail in Figs. 4a and 4b. The two wings 13a and 13b project to respective sides of a knife blade 12, which is designed as an extension of the shaft 16 of the wing knife and, in its mounted position, is located above the circular knife 15. The knife blade 12 is sharp both on the upper side and the lower side so as to provide the optimum cutting of the meat part closest to the ribs and is pointed to facilitate penetration into the meat. In the embodiment shown, the upper side inclines upwards towards the place where the wing 13 is mounted, and the lower side inclines downwards towards the actual shaft 16.

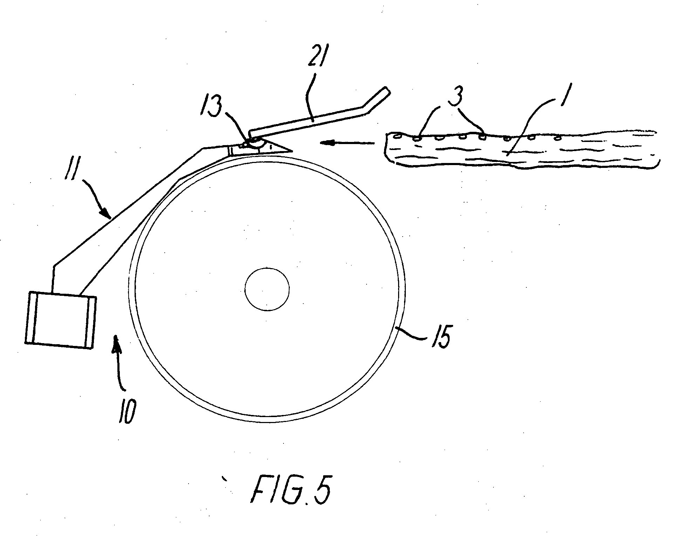

When two wings 13a, 13b are used as shown in Figs. 4a and 4b, the ribs 3 are undercut not only between the meat cut 5 and the rib cut 6, but also a distance out towards the spine 4 or the belly part. Typically, the undercutting cuts on the two sides of the meat cut 5 will have substantially equal extent, but embodiments with different extents may also be contemplated. In addition, the wings have respective shapes as seen in particular from Fig. 5b, and, in the uninfluenced position, are angled differently in relation to the shaft 16 and the upper edge of the knife blade 12 in order to achieve the optimum adaptation to the shape on the undersides of the ribs.

To further optimise the undercutting, the wings 13a and 13b of the wing knife are preferably hinged at the connection to the rest of the wing knife 11. In the embodiment shown in Figs. 4a and 4b, the two wings 13a and 13b are rigidly connected, and a pin 17 is passed through a thicker middle portion 18 into a back edge of the knife blade 12 and a projection 19 so that the entire wing can turn about the pin as shown by the arrow C. However, it is also possible to contemplate the wings 13a and 13b as individual, separate parts mounted independently about a joint axis of rotation or respective axes of rotation. Moreover, the wings may be spring-loaded so that they seek upwards towards the meat. Fig. 5 shows a wing knife 11 with such spring load in which the wings 13 extend relatively far upwards due to the lack of meat contact.

Alternatively, a wing knife with only one wing may be used so that the undercutting is performed between the meat cut and the rib cut.

The cut through the ribs 3 is made as the last one by means of a cutting device, not shown, typically a circular saw of a known type. Only with this cutting is the middle finally separated into two individual parts. The loin part can then be released from the conveyor by means of a rib-top saw or the like. The ribs need not be cut through directly. There may be knives that cut along the underside of the ribs so that first the meat in the flank part and then the meat in the loin part are cut free. For this purpose there may be knives upstream or downstream for cutting free the meat from the spine.

When the ribs are cut through at a distance from the spine and at the rib heads, loin ribs with ribs of the desired length and meat between the ribs are obtained.

Preferably, the distances between the conveyor holding the spine and the various cutting devices are variable so that the apparatus can thereby be adjusted for the production of different cuts. Moreover, the cutting devices can preferably be angled relative to the conveying direction to ensure that the cuts can be made at a desired angle relative to the plane of the middle. This may be advantageous, for example, if the cut must be made relatively close to the spine where the ribs curve upwards relative to the plane of the middle, as cutting at right angles is typically wanted, particularly of the ribs.

## Claims

1. An apparatus for cutting the meat part of a middle (1), comprising a meat knife (10) for performing a cut extending from the rind side up to the lower side of the ribs (3) and extending at a distance from the spine (4) in the longitudinal direction of the latter, and a transport arrangement having a retention device for holding the middle (1) by the spine (4) with the rib side of the middle facing in a direction, preferably upwards, and being adapted for providing a relative movement between the meat knife (10) and the retention device substantially in the longitudinal direction of the spine (4), and comprising at least one abutment (21, 22) located above the meat knife (5), **characterized in that** the abutment (21, 22) is movable in a direction downwards towards and away from the meat knife (10), and that the meat knife (10) is movable in a direction upwards towards the abutment (21, 22) with a force smaller than the force whereby the abutment can be moved downwards.

2. An apparatus according to claim 1, **characterized in that** the meat knife (10) comprises a control member (11) located underneath the abutment (21) and having a guide surface (18) that may be made to make contact with the underside of the ribs (3) of the middle in/at the cut (5) in the middle made by the meat knife (10).

3. An apparatus according to claim 2, **characterized in that** the control member comprises a wing knife (11) with a first knife part (12) arranged in a plane of the meat knife (10) and a second knife part (13a) projecting to one side from the upper edge of the first knife part and possibly a third knife part (13b) projecting to the other side, whereby the second and/or the third knife part of the wing knife may preferably be moved to a plane above the rest of the meat knife (10).

4. An apparatus according to any of the preceding claims, **characterized in that** it comprises a pneumatic cylinder for moving the abutment or each abutment (21, 22).

5. An apparatus according to claim 3, **characterized in that**, in a working position, the first knife part (12) has a sharp upper edge which is located at a level below the second knife part (13a) and inclines upwards in the conveying direction (A) of the middle and/or a sharp lower edge which inclines downwards in the transport direction of the middle.

6. An apparatus according to any one of the preceding claims, **characterized in that** it comprises a stop that limits the movement of the abutment down towards the meat knife.

7. An apparatus according to any one of the preceding claims, **characterized in that** the abutment and the meat knife are spring loaded towards each other during operation so that they may adjust to each other and the ribs during cutting.

8. An apparatus according to any one of the preceding claims, **characterized in that** it comprises two abutments (21, 22), which are moveable independently of each other between an inactive position and at least one active position.

9. An apparatus according to any one of the preceding claims, **characterized in that** the abutments are swingable arms (21, 22), the first abutment being located above the cut (5) of the meat knife (10) and the second abutment preferably in a position on the far side of the first abutment as seen from the retention device.

10. An apparatus according to claim 3 and any one of claims 4 to 9, **characterized in that** the wing knife (11) can be moved between two or more different positions, at least one of these positions being a working position and one of these positions being an inactive position.

11. An apparatus according to claim 10, **characterized in that** the meat knife (10) comprises a circular blade (15) for performing the cut going from the rind side and up to the underside of the ribs, and that the wing knife (11) is movable between its different positions by turning about the centre of the circular blade (15).

12. An apparatus according to claim 3 or any one of claims 4-11 when depending on claim 3, **characterized in that** the second and/or third knife part (13a, 13b) of the wing knife (11) is/are preferably mounted so that it can tilt (C) about an axis substantially parallel with the direction (A) of relative movement between the meat knife (10) and the retention device.

13. A method of cutting the meat part of a middle, whereby a meat knife (10) is used to perform a cut (5) extending from the rind side up to the lower side of ribs (3) and extending at a distance from the spine (4) and substantially in the longitudinal direction of the latter, the middle being held by the spine with the rib side of the middle facing in a direction, preferably upwards, by means of a retention device of a transport arrangement which provides a relative movement (A) between the meat knife and the retention device substantially in the longitudinal direction of the spine, **characterized in that** at least one abutment (21, 22) which is movable in a direction downwards towards and away from the meat knife (10) and is arranged above the meat knife is kept in contact with the rib side of the middle (1) during at least part of the cutting of the meat knife, and that, during at least part of the operation, the meat knife (10) is forced in a direction upwards towards the abutment (21, 22) with a force smaller than the force with which the abutment is abuting the middle.

14. A method according to claim 13, **characterized in that** a control member (11) of the meat knife (10) is arranged underneath the abutment (21) and with a guide surface (18) is made to make contact with the underside of the ribs of the middle in/at the cut (5) in the middle made by the meat knife.

15. A method according to claim 14, **characterized in that** the control member comprises a wing knife (11) with a first knife part (12) arranged in the plane of the meat knife and a second knife part (13a) projecting to one side from the upper edge of the first knife part and possibly a third knife part (13b) projecting to the other side, and that, in a working position, the second and/or the third knife part of the wing knife may be moved to a plane above the rest of the meat knife (10) so that the upper surface(s) of the knife part(s) serve(s) as guide surface(s).

16. A method according to claim 15, **characterized in that** the wing knife is kept in contact with the underside of the ribs during at least part of the cutting by the meat knife of the meat part.

17. A method according to any one of claims 13 to 16, **char- acterized** in that, before the cutting of the meat part, the abutment (21) is moved downwards for direct or indirect contact with part of the meat knife (10) and presses the latter down, and that the movement is stopped by contact with a stop.

18. A method according to claim 15 or any one of claims 16 to 17 when depending on claim 15, **characterized in that** the wing knife (11) is kept in its active position when it is located opposite to at least part of the ribs (3) of the middle, and in an inactive position when it is located opposite to the flank part (7) of the middle, and that the part of the meat knife that performs a cut extending from the rind side and up to the underside of the ribs is kept in an active position during the entire passage of the middle.

19. A method according to claim 15 or any one of claims 16 to 18 when depending on claim 15, **characterized in that** the meat knife (10) comprises a circular blade (15) for performing the cut (5) extending from the rind side and up to the underside of the ribs, and that the wing knife (11) is movable between its different positions by turning about the centre of the circular blade (15).

20. A method according to any one of claims 17 to 19 when depending on claim 15, **characterized in that** at least one knife blade (13a, 13b) of the wing knife (11) tilts about an axis which is substantially parallel with the relative direction of movement (A) between the meat knife and the retention device.

## Patentansprüche

1. Vorrichtung zum Schneiden des Fleischteils eines Mittelstücks (1), umfassend ein Fleischmesser (10) zum Ausführen eines Schnitts, der sich von der Schwartenseite bis zur unteren Seite der Rippen (3) erstreckt und sich in einem Abstand von der Wirbelsäule (4) in deren Längsrichtung erstreckt, und eine Transportanordnung die eine Halteeinrichtung zum Halten des Mittelstücks (1) an der Wirbelsäule, wobei die Rippenseite des Mittelstücks in eine Richtung, vorzugsweise nach oben, gerichtet ist, aufweist und daran angepasst ist, eine relative Bewegung zwischen dem Fleischmesser (10) und der Halteeinrichtung im Wesentlichen in der Längsrichtung der Wirbelsäule (4) zu bewirken, und die wenigstens eine Anlagefläche (21, 22) umfasst, die oberhalb des Fleischmessers (10) angeordnet ist, **dadurch gekennzeichnet, dass** die Anlagefläche (21, 22) in einer Richtung nach unten auf das Fleischmesser (10) hin und von diesem weg bewegbar ist, und dass das Fleischmesser (10) nach oben auf die Anlagefläche (21, 22) hin mit einer Kraft bewegbar ist, die kleiner ist als die Kraft, durch die die Anlagefläche nach unten bewegt werden kann.

2. Vorrichtung nach Anspruch 1, **dadurch gekennzeichnet, dass** das Fleischmesser (10) ein Steuerelement (11) umfasst, das unterhalb der Anlagefläche (21) angeordnet ist und eine Führungsfläche (18) aufweist, die mit der Unterseite der Rippen (3) des Mittelstücks in/an dem von dem Fleischmesser (10) gemachten Schnitt (5) in dem Mittelstück in Kontakt gebracht werden kann.

3. Vorrichtung nach Anspruch 2, **dadurch gekennzeichnet, dass** das Steuerelement ein Seitenmesser (11) umfasst, wobei ein erstes Messerteil (12) in einer Ebene des Fleischmessers (10) angeordnet ist und ein zweites Messerteil (13a) zu einer Seite von dem oberen Rand des ersten Messerteils hervorsteht und möglicherweise ein drittes Messerteil (13b) zu der anderen Seite hervorsteht, wobei das zweite und/oder das dritte Messerteil des Seitenmessers vorzugsweise in eine Ebene über dem Rest des Fleischmessers (10) bewegt werden können.

4. Vorrichtung nach einem der vorstehenden Ansprüche, **dadurch gekennzeichnet, dass** sie einen Pneumatik-Zylinder zum Bewegen der oder jeder Anlagefläche (21, 22) aufweist.

5. Vorrichtung nach Anspruch 3, **dadurch gekennzeichnet, dass** das erste Messerteil (12) in einer Arbeitsposition einen scharfen oberen Rand, der in einer Ebene unterhalb des zweiten Messerteils (13a) angeordnet ist und sich nach oben in der Förderrichtung (A) des Mittelstücks neigt, und/oder einen scharfen unteren Rand, der sich nach unten in der Transportrichtung des Mittelstücks neigt, aufweist.

6. Vorrichtung nach einem der vorstehenden Ansprüche, **dadurch gekennzeichnet, dass** sie einen Anschlag aufweist, der die Bewegung der Anlagefläche nach unten auf das Fleischmesser hin begrenzt.

7. Vorrichtung nach einem der vorstehenden Ansprüche, **dadurch gekennzeichnet, dass** die Anlagefläche und das Fleischmesser während des Betriebs gegeneinander federbeaufschlagt sind, so dass sie sich während des Schneidens zueinander und zu den Rippen ausrichten können.

8. Vorrichtung nach einem der vorstehenden Ansprüche, **dadurch gekennzeichnet, dass** sie zwei Anlageflächen (21, 22) umfasst, die unabhängig voneinander zwischen einer inaktiven Position und zumindest einer aktiven Position bewegbar sind.

9. Vorrichtung nach einem der vorstehenden Ansprüche, **dadurch gekennzeichnet, dass** die Anlageflächen schwenkbare Arme (21, 22) sind, wobei die erste Anlagefläche oberhalb des Schnitts (5) des Fleischmessers (10) und die zweite Anlagefläche vorzugsweise in einer Position an der entfernten Seite der ersten Anlagefläche, von der Halteeinrichtung aus gesehen, angeordnet ist.

10. Vorrichtung nach Anspruch 3 und nach einem der Ansprüche 4 bis 9, **dadurch gekennzeichnet, dass** das Seitenmesser (11) zwischen zwei oder mehr verschiedenen Positionen bewegt werden kann, wobei mindestens eine dieser Positionen ein Arbeitsposition ist und eine dieser Positionen eine inaktive Position ist.

11. Vorrichtung nach Anspruch 10, **dadurch gekennzeichnet, dass** das Fleischmesser (10) ein Kreismesser (15) umfasst, um den Schnitt, der von der Schwartenseite und nach oben zu der Unterseite der Rippen geht, auszuführen, und dass das Seitenmesser (11) zwischen seinen verschiedenen Positionen bewegbar ist, indem es sich um den Mittelpunkt des Kreismessers (15) dreht.

12. Vorrichtung nach Anspruch 3 oder nach einem der Ansprüche 4 bis 11, sofern abhängig von Anspruch 3, **dadurch gekennzeichnet, dass** das zweite und/oder das dritte Messerteil (13a, 13b) des Seitenmessers (11) vorzugsweise so angebracht ist/sind, dass es um eine Achse schwenken (C) kann, die im Wesentlichen parallel zur Richtung (A) der relativen Bewegung zwischen dem Fleischmesser (10) und der Halteeinrichtung ist.

13. Verfahren zum Schneiden des Fleischteils eines Mittelstücks, wobei ein Fleischmesser (10) verwendet wird, um einen Schnitt (5) auszuführen, der sich von der Schwartenseite bis zur unteren Seite der Rippen (3) erstreckt und sich in einem Abstand von der Wirbelsäule (4) im Wesentlichen in deren Längsrichtung erstreckt, wobei das Mittelstück an der Wirbelsäule von einer Halteeinrichtung einer Transporteinrichtung, die eine relative Bewegung (A) zwischen dem Fleischmesser und der Halteeinrichtung im Wesentlichen in Längsrichtung der Wirbelsäule bewirkt, gehalten wird, wobei die Rippenseite des Mittelstücks in eine Richtung, vorzugsweise nach oben, gerichtet ist, **dadurch gekennzeichnet, dass** mindestens eine Anlagefläche (21, 22), die nach unten auf das Fleischmesser (10) hin und von diesem weg bewegbar und oberhalb des Fleischmessers angeordnet ist, mit der Rippenseite des Mittelstücks (1) während zumindest eines Teils des Schneidens des Fleischmessers in Kontakt gehalten wird, und dass, während zumindest eines Teils des Vorgangs, das Fleischmesser (10) in eine Richtung nach oben auf die Anlagefläche (21, 22) hin mit einer Kraft gezwungen wird, die kleiner ist als die Kraft, mit der die Anlagefläche auf das Mittelstück stößt.

14. Verfahren nach Anspruch 13, **dadurch gekennzeichnet, dass** ein Steuerelement (11) des Fleischmessers (10) unterhalb der Anlagefläche (21) angeordnet ist und mit einer Führungsfläche (18) ausgebildet ist, um mit der Unterseite der Rippen des Mittelstücks in/an dem von dem Fleischmesser gemachten Schnitt (5) in dem Mittelstück in Kontakt zu treten.

15. Verfahren nach Anspruch 14, **dadurch gekennzeichnet, dass** das Steuerelement ein Seitenmesser (11) umfasst, wobei ein erstes Messerteil (12) in der Ebene des Fleischmessers angeordnet ist und ein zweites Messerteil (13a) zu einer Seite von dem oberen Rand des ersten Messerteils hervorsteht und möglicherweise ein drittes Messerteil (13b) zu der anderen Seite hervorsteht, und dass in einer Arbeitsposition das zweite und/oder das dritte Messerteil des Seitenmessers in eine Ebene über dem Rest des Fleischmessers (10) bewegt werden können, so dass die obere(n) Oberfläche(n) des/der Messerteile/s als Führungsfläche(n) dient/dienen.

16. Verfahren nach Anspruch 15, **dadurch gekennzeichnet, dass** das Seitenmesser während zumindest eines Teils des Schneidens des Fleischstückes durch das Fleischmesser in Kontakt mit der Unterseite der Rippen gehalten wird.

17. Verfahren nach einem der Ansprüche 13 bis 16, **dadurch gekennzeichnet, dass** die Anlagefläche (21) vor dem Schneiden des Fleischstücks zum direkten oder indirekten Kontakt mit einem Teil des Fleischmessers (10) nach unten bewegt wird und letzteres nach unten drückt und dass die Bewegung durch Kontakt mit einem Anschlag gestoppt wird.

18. Verfahren nach Anspruch 15 oder nach einem der Ansprüche 16 bis 17, sofern abhängig von Anspruch 15, **dadurch gekennzeichnet, dass** das Seitenmesser (11) in seiner aktiven Position gehalten wird, wenn es gegenüber von zumindest einem Teil der Rippen (3) des Mittelstücks angeordnet ist, und in einer inaktiven Position, wenn es gegenüber dem Flankenteil (7) des Mittelstücks angeordnet ist, und dass der Teil des Fleischmessers, der einen Schnitt, der sich von der Schwartenseite und bis zur Unterseite der Rippen erstreckt, durchführt, während des gesamten Wegs durch das Mittelstück in einer aktiven Position gehalten wird.

19. Verfahren nach Anspruch 15 oder nach einem der Ansprüche 16 bis 18, sofern abhängig von Anspruch 15, **dadurch gekennzeichnet, dass** das Fleischmesser (10) ein Kreismesser (15) umfasst, um den Schnitt (5) durchzuführen, der sich von der Schwartenseite und nach oben zur Unterseite der Rippen erstreckt, und dass das Seitenmesser (11) zwischen seinen verschiedenen Positionen bewegbar ist, indem es um den Mittelpunkt des Kreismessers (15) gedreht wird.

20. Verfahren nach einem der Ansprüche 17 bis 19, sofern abhängig von Anspruch 15, **dadurch gekennzeichnet, dass** zumindest eine Messerklinge (13a, 13b) des Seitenmessers (11) um eine Achse schwenkt, die im Wesentlichen parallel zur relativen Bewegungsrichtung (A) zwischen dem Fleischmesser und der Halteeinrichtung ist.

## Revendications

1. Appareil pour découper la partie de viande d'une carcasse (1), comprenant un couteau à viande (10) pour réaliser une découpe s'étendant du côté de la couenne jusqu'au côté inférieur des côtes (3) et s'étendant à une certaine distance de la colonne vertébrale (4) dans le sens longitudinal de cette dernière, et un agencement de transport ayant un dispositif de retenue pour maintenir la carcasse (1) par la colonne vertébrale (4) avec le côté des côtes de la carcasse orienté dans une direction, de préférence vers le haut, et étant adapté pour fournir un mouvement relatif entre le couteau à viande (10) et le dispositif de retenue essentiellement dans le sens longitudinal de la colonne vertébrale (4), et comprenant au moins une butée (21, 22) positionnée au-dessus du couteau à viande (5), **caractérisé en ce que** la butée (21, 22) soit mobile dans une direction descendante vers et à distance du couteau à viande (10), et **en ce que** le couteau à viande (10) soit mobile dans une direction ascendante vers la butée (21, 22) avec une force inférieure à la force moyennant quoi la butée peut être déplacée vers le bas.

2. Appareil selon la revendication 1, **caractérisé en ce que** le couteau à viande (10) comprenne un élément de commande (11) positionné en-dessous de la butée (21) et ayant une surface de guidage (18) qui peut être amenée à établir le contact avec la face inférieure des côtes (3) de la carcasse dans/au niveau de la découpe (5) dans la carcasse, effectuée par le couteau à viande (10).

3. Appareil selon la revendication 2, **caractérisé en ce que** l'élément de commande comprenne un couteau en forme d'aile (11) avec une première partie de couteau (12) agencée dans un plan du couteau à viande (10) et une deuxième partie de couteau (13a) faisant saillie d'un côté à partir du bord supérieur de la première partie de couteau et éventuellement une troisième partie de couteau (13b) faisant saillie de l'autre côté, moyennant quoi la deuxième et/ou la troisième partie de couteau du couteau en forme d'aile peuvent/peut de préférence être déplacées dans un plan au-dessus du reste du couteau à viande (10).

4. Appareil selon l'une quelconque des revendications précédentes, **caractérisé en ce qu'**il comprenne un vérin pneumatique pour déplacer la butée ou chaque butée (21, 22).

5. Appareil selon la revendication 3, **caractérisé en ce que**, dans une position de travail, la première partie de couteau (12) a un bord supérieur tranchant qui est positionné à un niveau situé au-dessous de la deuxième partie de couteau (13a) et s'incline vers le haut dans la direction de transport (A) de la carcasse et/ou un bord inférieur tranchant qui s'incline vers le bas dans la direction de transport de la carcasse.

6. Appareil selon l'une quelconque des revendications précédentes, **caractérisé en ce qu'**il comprenne un arrêt qui limite le mouvement de la butée vers le bas vers le couteau à viande.

7. Appareil selon l'une quelconque des revendications précédentes, **caractérisé en ce que** la butée et le couteau à viande soient chargés par ressort l'un vers l'autre pendant le fonctionnement, de sorte qu'ils peuvent se régler l'un par rapport à l'autre et par rapport aux côtes pendant la découpe.

8. Appareil selon l'une quelconque des revendications précédentes, **caractérisé en ce qu'**il comprenne deux butées (21, 22) qui soient mobiles indépendamment l'une de l'autre entre une position inactive et au moins une position active.

9. Appareil selon l'une quelconque des revendications précédentes, **caractérisé en ce que** les butées soient des bras oscillants (21, 22), la première butée étant positionnée au-dessus de la découpe (5) du couteau à viande (10) et la seconde butée, de préférence, dans une position sur le côté éloigné de la première butée, comme observé depuis le dispositif de retenue.

10. Appareil selon la revendication et l'une quelconque des revendications 4 à 9, **caractérisé en ce que** le couteau en forme d'aile (11) puisse être déplacé entre deux ou plus positions différentes, au moins l'une de ces positions étant une position de travail et l'une de ces positions étant une position inactive.

11. Appareil selon la revendication 10, **caractérisé en ce que** le couteau à viande (10) comprenne une lame circulaire (15) pour réaliser la découpe allant du côté de la couenne jusqu'à la face inférieure des côtes, et **en ce que** le couteau en forme d'aile (11) soit mobile entre ses différentes positions en tournant autour du centre de la lame circulaire (15).

12. Appareil selon la revendication ou **l'une quelconque des** revendications 4 à 11 lorsqu'elle dépend de la revendication 3, **caractérisé en ce que** la deuxième et/ou la troisième partie de couteau (13a, 13b) du couteau en forme d'aile (11) soit/soient de préférence montée(s) de sorte qu'il puisse s'incliner (C) autour d'un axe essentiellement parallèle à la direction (A) du mouvement relatif entre le couteau à viande (10) et le dispositif de retenue.

13. Procédé pour découper la partie de viande d'une carcasse, moyennant quoi un couteau à viande (10) est utilisé pour effectuer une découpe (5) s'étendant depuis le côté de la couenne jusqu'au côté inférieur des côtes (3) et s'étendant à une certaine distance de la colonne vertébrale (4) et essentiellement dans la direction longitudinale de ce dernier, la carcasse étant maintenue par la colonne vertébrale avec le côté des côtes de la carcasse qui est orienté dans une direction, de préférence, vers le haut, au moyen d'un dispositif de retenue d'un agencement de transport qui fournit un mouvement (A) relatif entre le couteau à viande et le dispositif de retenue essentiellement dans le sens longitudinal de la colonne vertébrale, **caractérisé en ce qu'**au moins une butée (21, 22) qui est mobile dans une direction descendante vers et qui s'éloigne du couteau à viande (10) et qui est agencée au-dessus du couteau à viande, soit maintenue en contact avec le côté des côtes de la carcasse (1) pendant au moins une partie de la découpe du couteau à viande et **en ce que**, pendant au moins une partie du fonctionnement, le couteau à viande (10) soit forcé dans une direction ascendante vers la butée (21, 22) avec une force inférieure à la force avec laquelle la butée vient en butée contre la carcasse.

14. Procédé selon la revendication 13, **caractérisé en ce qu'**un élément de commande (11) du couteau à viande (10) est agencé au-dessous de la butée (21) et avec une surface de guidage (18), soit amené à établir le contact avec la face inférieure des côtes de la carcasse dans/au niveau de la découpe (5) dans la carcasse, effectuée par le couteau à viande.

15. Procédé selon la revendication 14, **caractérisé en ce que** l'élément de commande comprenne un couteau en forme d'aile (11) avec une première partie de couteau (12) agencée dans le plan du couteau à viande et une deuxième partie de couteau (13a) faisant saillie d'un côté depuis le bord supérieur de la première partie de couteau et éventuellement une troisième partie de couteau (13b) faisant saillie de l'autre côté, et **en ce que**, dans une position de travail, la deuxième et/ou la troisième partie de couteau du couteau en forme d'aile puissent/puisse être déplacées dans un plan au-dessus du reste du couteau à viande (10) de sorte que la (les) surface(s) supérieure(s) de la (des) partie(s) de couteau sert (servent) de surface(s) de guidage.

16. Procédé selon la revendication 15, **caractérisé en ce que** le couteau en forme d'aile soit maintenu en contact avec la face inférieure des côtes pendant au moins une partie de la découpe par le couteau à viande de la partie de viande.

17. Procédé selon l'une quelconque des revendications 13 à 16, **caractérisé en ce que**, avant la découpe de la partie de viande, la butée (21) soit déplacée vers le bas pour le contact direct ou indirect avec une partie du couteau à viande (10) et comprime cette dernière, et **en ce que** le mouvement soit arrêté par contact avec un arrêt.

18. Procédé selon la revendication 15 ou l'une quelconque des revendications 16 à 17 lorsqu'elle dépend de la revendication 15, **caractérisé en ce que** le couteau en forme d'aile (11) soit maintenu dans sa position active lorsqu'il est positionné à l'opposé d'au moins une partie des côtes (3) de la carcasse, et dans une position inactive lorsqu'il est positionné à l'opposé de la partie de flanc (7) de la carcasse, et **en ce que** la partie du couteau à viande qui effectue une découpe s'étendant depuis le côté de la couenne jusqu'à la face inférieure des côtes soit maintenue dans une position active pendant tout le passage de la carcasse.

19. **Procédé selon** la revendication 15 ou l'une quelconque des revendications 16 à 18 lorsqu'elle dépend de la revendication 15, **caractérisé en ce que** le couteau à viande (10) comprenne une lame circulaire (15) pour effectuer la découpe (5) s'étendant depuis le côté de la couenne jusqu'à la face inférieure des côtes, et **en ce que** le couteau en forme d'aile (11) soit mobile entre ses différentes positions en tournant autour du centre de la lame circulaire (15).

20. Procédé selon l'une quelconque des revendications 17 à 19 lorsqu'elle dépend de la revendication 15, **caractérisé en ce qu'au** moins une lame de couteau (13a, 13b) du couteau en forme d'aile (11) s'incline autour d'un axe qui est essentiellement parallèle à la direction de mouvement (A) relative entre le couteau à viande et le dispositif de retenue.
